# EUROPÄISCHE PATENTANMELDUNG

(11) **EP 1 095 995 A2**
(43) Veröffentlichungstag der Anmeldung: **02.05.2001**
(21) Anmeldenummer: 00122119.1
(22) Anmeldetag: 12.10.2000
(51) Int. Cl.: C09J 7/02

(54) **Klebeband und dessen Verwendung zur Abdeckung von Fensterflanschen**

(30) Priorität: 29.10.1999 DE 19952213
(71) Anmelder: Beiersdorf AG, 20245 Hamburg (DE)
(72) Erfinder: Böhm, Nicolai, Dr., 20257 Hamburg (DE); Krupke, Siegfried, 25463 Tornesch (DE); Schümann, Uwe, Dr., 25421 Pinneberg (DE); Wappler, Ulrike, 20253 Hamburg (DE)

(57) **Zusammenfassung**

Klebeband, umfassend ein Trägermaterial, auf das eine Selbstklebemasse basierend auf einem Copolymer aus Ethylen, Vinylacetat, Acrylsäureester und gegebenenfalls Acrylsäureamid einseitig aufgetragen ist.

## Beschreibung

Die Erfindung betrifft ein Klebeband insbesondere zur Abdeckung von Fensterflanschen insbesondere in Automobilrohkarosserien, die mit kathodischem Tauchlack (KTL) beschichtet sind. Das Klebeband soll die Fensterflansche bei den nachfolgenden Lackier- und Einbrennprozessen vor dem Überlackieren derartig schützen, daß nach dem Abziehen des Klebebandes auf den füller- und decklack-freien Fensterflansch eine Automobilglasscheibe mit einem reaktiven PU-Scheibenkleber eingeklebt werden kann.

Automobilglasscheiben werden herkömmlich mit Gummidichtungen in der fertig lackierten Fahrzeugkarosserie fixiert. Dieses Verfahren wurde in den letzten Jahren zunehmend durch das Einkleben der Scheiben mit Reaktivklebstoffen (zum Beispiel auf Polyurethanbasis) ersetzt. Dabei wird die Scheibe mit dem Kleber bestrichen und so auf die Karosserie aufgesetzt, daß die Kleberaupe auf den Fensterflansch aufgedrückt wird.

Die eingeklebten Scheiben, insbesondere die Windschutzscheiben, dienen heute als versteifendes Element der Karosserie. Im Extremfall vermeiden sie bei einem Überschlag des Fahrzeugs das Einknicken der Dachsäulen. Daher ist eine ausreichende Verklebungsfestigkeit für die Unfallsicherheit eines modernen Kraftfahrzeugs maßgeblich.

Moderne Autolacke bestehen aus diversen Schichten, die auf das geprimerte Karosseriemetall in folgender Reihenfolge aufgebracht werden (schematisiert):
- elektrophoretischer Tauchlack, meist kathodischer Tauchlack (KTL)
- Füller- oder Funktionsschicht
- Farblack
- Decklack

Nach Römpp Lexikon Chemie (Version 1.5, Stuttgart/New York: Georg Thieme Verlag 1998) stellt die elektrophoretische Lackierung (Elektrotauchlackierung) ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als 2. Elektrode.
Die abgeschiedene Lackmenge ist der zugeführten Strommenge direkt proportional. Die elektrophoretische Lackierung wird besonders zur Grundierung, zum Beispiel in der Automobilindustrie eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (sogenannte elektrostatische Lackierung).

Wird die Automobilscheibe nach abgeschlossenem Lackiervorgang auf den mitlackierten Fensterflansch geklebt, sind folgende Nachteile gegeben.
Da der Scheibenkleber auf den Decklack als Haftgrund abgestimmt sein muß, kann sich bei der Vielzahl der bei einem Hersteller verwendeten Decklacke eine unnötig hohe Komplexität ergeben, weil eine Vielzahl von passenden Klebern bereit gehalten werden muß. Wichtiger ist jedoch die Tatsache, daß die Gesamtverklebungsfestigkeit der Automobilscheibe von der schwächsten Stelle im vielschichtigen Lackaufbau abhängt und damit weit geringer sein kann als die Verklebungsfestigkeit des Klebers auf dem Decklack.

Es ist daher vorteilhaft, die Scheibe auf die unterste Lackschicht, die KTL-Schicht, aufzubringen. Die Zahl der verwendeten KTL-Präparate bei einem Hersteller ist üblicherweise geringer als die der Decklacke. Zum einen liegen damit wenige definierte Haftgründe für den Scheibenkleber vor, und zum anderen birgt der Aufbau geprimertes Metall/KTL/Scheibenkleber mit zwei Grenzschichten eine geringere Gefahr des Bruches als ein komplexer Gesamtlackaufbau.

Zum Abdecken des Fensterflansches nach der Aufbringung des KTL läßt sich ein PVC-Plastisol verwenden, wie es in der EP 0 655 989 B1 beschrieben ist. Dieses wird in flüssiger Form auf den Fensterflansch aufgebracht, überlackiert und geliert während der Einbrennphase bei Temperaturen von mindestens 163 °C zu einem festen Film aus. Nachteilig an diesem Verfahren ist, daß für das Demaskieren nach erfolgtem Einbrennen ein 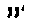 Anfasser" mechanisch freigelegt werden muß, bei dem leicht auch der KTL verletzt werden kann, was die Gefahr nachfolgender Korrosion birgt.
Der Plastisolstreifen kreuzt an den Fensterflanschen zum Teil mehrfach PVC-Nahtabdichtungen, die Schweißnähte auffüllen. Beim Ausgelieren werden häufig starke Verklebungen zwischen Nahtabdichtungen und PVC-Plastisol Fensterflanschabdeckung beobachtet, die eine problemlose Demaskierung verhindern. Ebenfalls zu beobachten sind plastisolbedingte Kontaminationen des Haftgrundes derart, daß sich ein Adhäsionsversagen an der Grenze zwischen Scheibenkleber und ehemals plastisolmaskiertem KTL zeigt.
Die geforderte Verklebungssicherheit der Scheibe ist so nicht gewährleistet.
Diesem kann zwar durch Einsatz eines Primers entgegengewirkt werden, doch ist dieser Schritt arbeitsintensiv, führt zu unerwünschten Lösungsmittelemissionen und kann durch versehentliches Verspritzen oder Tropfen auf dem Decklack Lackreparaturen nötig machen.

Eine vorteilhaftere Möglichkeit der Maskierung von Fensterflanschen ist die Verwendung von Klebebändern. Seit mehreren Jahren wird die Maskierung mit einem PVC-Polyester-Laminat, selbstklebend ausgerüstet mit einer Naturkautschukklebemasse, praktiziert. Dieses wird analog der Plastisolraupe vor dem Füllern und Lackieren auf den KTL-beschichteten Fensterflansch geklebt und nach erfolgtem Einbrennen mitsamt den darauf aufgebrachten Lackschichten abgezogen. Die Applikation ist von Hand, aber auch automatisiert per Roboter möglich. Der Nachteil dieses letztgenannten Produkts ist die auf vielen KTL festzustellende Haftgrundkontamination durch die Naturkautschukselbstklebemasse. Auch in diesem Fall kann Primerung mit den oben beschriebenen Nachteilen den Haftgrund reaktivieren.

Es ist bekannt, daß die Einbrennbedingungen des KTL maßgeblich seine Eigenschaften als Haftgrund und seine Empfindlichkeit gegenüber Kontamination durch die Maskierung beeinflussen. Sowohl zu hohe als auch zu niedrige Einbrenn-Temperaturen können einen negativen Effekt haben.

Aufgabe der Erfindung ist es, ein Klebeband insbesondere zur Fensterflanschabdeckung mit einer Klebmasse zu entwickeln, die die Nachteile des Standes der Technik nicht oder nicht in dem Maße zeigt. Insbesondere soll das Klebeband die Fensterflansche derartig schützen, daß nach dem Abziehen des Klebebandes auf den Fensterflansch eine Automobilglasscheibe mit einem reaktiven PU-Scheibenkleber eingeklebt werden kann.

Gelöst wird diese Aufgabe durch ein Klebeband, wie es im Hauptanspruch niedergelegt ist. Gegenstand der Unteransprüche sind dabei vorteilhafte Weiterbildungen des Klebebands.

Demgemäß betrifft die Erfindung ein Klebeband insbesondere zur Fensterflanschmaskierung, umfassend ein Trägermaterial, auf das eine Selbstklebemasse basierend auf einem Copolymer aus Ethylen, Vinylacetat, Acrylsäureester und gegebenenfalls Acrylsäureamid einseitig aufgetragen ist. Ein solches Copolymer wird in der EP 0 017 986 A1 beschrieben.

Überraschend und für den Fachmann nicht vorhersehbar erweisen sich derartige Synthesekautschuke basierend auf den Monomeren Ethylen (E), Vinylacetat (VA) Acrylsäureestern (Ac) und Acrylsäureamiden (Acam), wie sie zum Beispiel von Air Products Polymers, Burghausen, Deutschland als Dispersionen vertrieben werden, für diese Anwendung als geeignete Klebemasse.

In einer bevorzugten Ausführungsform weist die Selbstklebemasse die folgende Zusammensetzung auf:
- Ethylen: 10 bis 30, besonders bevorzugt 10 bis 15 Gew.-%
- Vinylacetat: 20 bis 55, besonders bevorzugt 30 bis 35 Gew.-%
- Acrylsäureester: 30 bis 69, besonders bevorzugt 50 bis 60 Gew.-%
- Acrylsäureamid: 0 bis 8, besonders bevorzugt 0,5 Gew.-%

Insbesondere das Produkt Vinnapas EAF 60 mit einer Zusammensetzung gemäß der bevorzugten Ausführungsform der Selbstklebemasse zeigt universelle KTL-Verträglichkeit in bezug auf die Scheibenkleberadhäsion und erfüllt überdies wichtige Kriterien wie ausgewogene Klebkraft auf KTL-Untergründen, sowohl im frisch verklebten Zustand als auch nach praxisnaher thermischer Belastung (zum Beispiel 20 min bei 180 °C), sowie gute Scherstabilität für die Verklebung in Kurven.

Die Selbstklebemasse kann auf den Träger in Dispersionsform aufgetragen werden, so daß nach dem Trocknen in der Wärme ein Klebefilm von vorzugsweise 15 bis 40 µm Dicke resultiert.

Als Träger eignen sich prinzipiell alle bahnförmigen Materialien, die im verklebten Zustand eine Hitzebeständigkeit von mehr als 180 °C und eine ausreichende mechanische Festigkeit in Dicken bis maximal 200 µm aufweisen. Dazu zählen insbesondere Polyesterfolien, wie Polyethylenterephthalatfolien (PET), aber auch Weich-PVC-Folien sowie Gewebe auf Baumwollbasis, auf Basis aromatischer Polyamide und/oder Polyester sowie Vliese oder Kombinationen der genannten Materialien.

Je nach Trägermaterial kann ein Primer eingesetzt werden, der eine gute Haftung von Träger zu Klebmasse sicherstellt.

Weiter vorteilhaft kann auf der Rückseite des Trägermaterials ein Trennlack zur leichten Abrollbarkeit vorhanden sein, nämlich dann, wenn die Masse gut auf der Rückseite haftet. Der Trennlack empfiehlt sich insbesondere, wenn das Material ohne Trennmedium zur Rolle gewickelt werden soll.

Besonders kommen die Vorteile des erfindungsgemäßen Klebebands zum Tragen, wenn dieses im Automobilbau eingesetzt wird. Nachfolgend wird ausführlich dieser Anwendungsfall geschildert, der nur beispielhaft für ähnliche Anwendungen ausgewählt ist.

Mit Hilfe des Klebebands soll der mit KTL beschichtete Fensterflansch der Karosserie vor Überlackierung bei den nachgeschalteten Lackierschritten geschützt werden, um darauf Automobilscheiben mit Hilfe von Reaktivklebern zu kleben, ohne den KTL in seiner Funktion als Haftgrund für den Scheibenkleber zu beeinträchtigen. Diese Verträglichkeit soll universell für möglichst viele KTL-Lacke zutreffen.

Das Klebeband mit der bevorzugt vorgeschlagenen Selbstklebemasse aus einem Ethylen-Vinylacetat-Acrylsäureester-Acrylsäureamid-Copolymer wird nach dem Elektrotauchlackiervorgang, in dem die KTL-Schicht auf die geprimerte Rohkarosserie aufgebracht wird, und nach dem Einbrennen der KTL-Schicht, bei dem der reaktive Roh-KTL durch thermische Einwirkung vernetzt wird, auf den Fensterflansch bevorzugt in 10 bis 25 mm Breite aufgeklebt.

Dabei muß das Band um die Kurven herum gedehnt werden, damit kein Sprühnebel der nachfolgenden Lackierschritte unter etwaige Falten gelangen kann. Das Band verbleibt solange auf der Karosserie, bis alle Lackierschritte vollzogen sind. Nach Abkühlen der Karosserie kann das Band dann mitsamt den darauf haftenden Lackschichten abgezogen werden, ohne daß Klebmassereste auf der demaskierten KTL-Spur zurückbleiben. Diese KTL-Spur bietet einen sicheren Haftgrund für die Verklebung von Automobilscheiben mit Hilfe von Reaktivklebstoffen auf Polyurethanbasis.

Das erfindungsgemäße Klebeband wird nachfolgend in bevorzugter Ausführung anhand eines Beispiels beschrieben, ohne damit die Erfindung in irgendeiner Weise beschränken zu wollen. Des weiteren sind zwei Vergleichsbeispiele aufgeführt, in denen untaugliche Klebebänder dargestellt sind.

### Beispiele

Als Selbstklebemassen für Klebebänder, die zur Fensterflanschmaskierung eingesetzt werden, kommen grundsätzlich Massen basierend auf Naturkautschuk, Synthesekautschuk oder Acrylatpolymeren in Betracht.
Bei allen getesteten Naturkautschuk- und reinen Acrylatmassen wurde allerdings eine Kontamination des KTL detektiert. Dieses wurde mit einem aussagefähigen Test, wie er in Beispiel 1 näher erläutert wird, in Anlehnung an die Prüfmethode M99G169 von Ford ermittelt. Nach dieser Methode wird auf Kohäsionsbruch des Scheibenklebers getestet. Im negativen Fall zeigt sich Adhäsionsversagen zwischen Kleber und Haftgrund (KTL).

### Beispiel 1

Eine 25 µm dicke Polyethylenterephthalatfolie wurde mit Polyvinylidendichlorid-Lösung einseitig geprimert und mit Vinnapas EAF 60 (Air Products Polymers, Burghausen, Deutschland) so nachgestrichen, daß nach dem Trocknen ein Klebeband mit einer Gesamtdicke von 50 µm resultierte.

Es wurden Testbleche elektrophoretisch mit verschiedenen KTL-Typen beschichtet und orientiert an den Herstellerempfehlungen eingebrannt (siehe Tabelle 1). Das Klebeband wurde in 20 mm Breite blasenfrei auf die Testbleche geklebt und fest angedrückt. Anschließend wurden die beklebten Bleche gemäß Tabelle 1 einer Temperaturbelastung unterzogen. Nach dem Abkühlen wurde das Klebeband vom Blech abgezogen. Unmittelbar nach dem Abziehen wurden gemäß Tabelle 1 verschiedene Scheibenkleber auf PU-Basis auf die freigelegten Stellen ca. 5 mm dick aufgetragen, wobei der ehemals beklebte Streifen vollständig abdeckt wurde sowie noch einen beidseitigen Überstand von jeweils einigen Millimetern hatte.

Anschließend wurden die Prüfbleche bei 23 °C ± 1 °C und bei 50 % ± 3 % relativer Luftfeuchte zum vollständigen Aushärten der feuchtigkeitsreaktiven Scheibenkleber 7 Tage gelagert.

Nach dem Aushärten wurde zunächst ein Cuttermesserschnitt in Längsrichtung entlang der Begrenzungslinien des Klebebandes gemacht. Dann wurde die Kleberaupe an einem Ende aufgenommen und vom KTL-Untergrund abgezogen. Dabei wurde in einem Abstand von ca. 5 bis 10 mm ein Cuttermesserschnitt jeweils an den Abzugsstellen von der Seite des freien Raupenendes bis auf den Haftuntergrund gemacht. So wurde sowohl mit dem Teil der Prüffläche verfahren, wo zuvor das Klebeband verklebt war, als auch mit der überstehend verklebten Fläche (= Überstand).

Bei dem durch dieses Abziehen entstandene Bruchbild des Scheibenklebers auf der Prüffläche, wo zuvor das Fensterflanschabdeckband verklebt war, wurde der Anteil kohäsiven Bruches im Vergleich zur vorher unbeklebten Fläche am gesamten Bruch abgeschätzt. Ein 100 %iger Kohäsionsbruch ist das beste zu erreichende Ergebnis.

Wie aus Tabelle 1 ersichtlich, erwies sich das Band mit allen getesteten KTL/Scheibenkleber-Kombinationen als verträglich.

Als weiterer Test wurde das Klebeband kurvenförmig mit einem definierten Radius (r = 100 mm) auf ein mit Cathoguard 310 beschichtetes Testblech, das 10 min bei 175 °C eingebrannt worden war, appliziert. Das beklebte Blech wurde zunächst 5 min auf 180 °C im Ofen temperiert und anschließend 15 min bei 180 °C temperaturbehandelt.

Das kurvenförmig verklebte Band wies nach dem Ofenaufenthalt den gleichen Kurvenradius auf wie vorher, d.h., die Masse verfügt über eine praxisgerechte Scherstabilität auch unter hohen Temperaturen.

Nach dem Abkühlen wurde das Klebeband vom Blech abgezogen. Dabei wurde eine Abzugskraft von 2,6 N/cm gemessen, ohne daß sichtbare Masserückstände auf dem Blech verblieben.

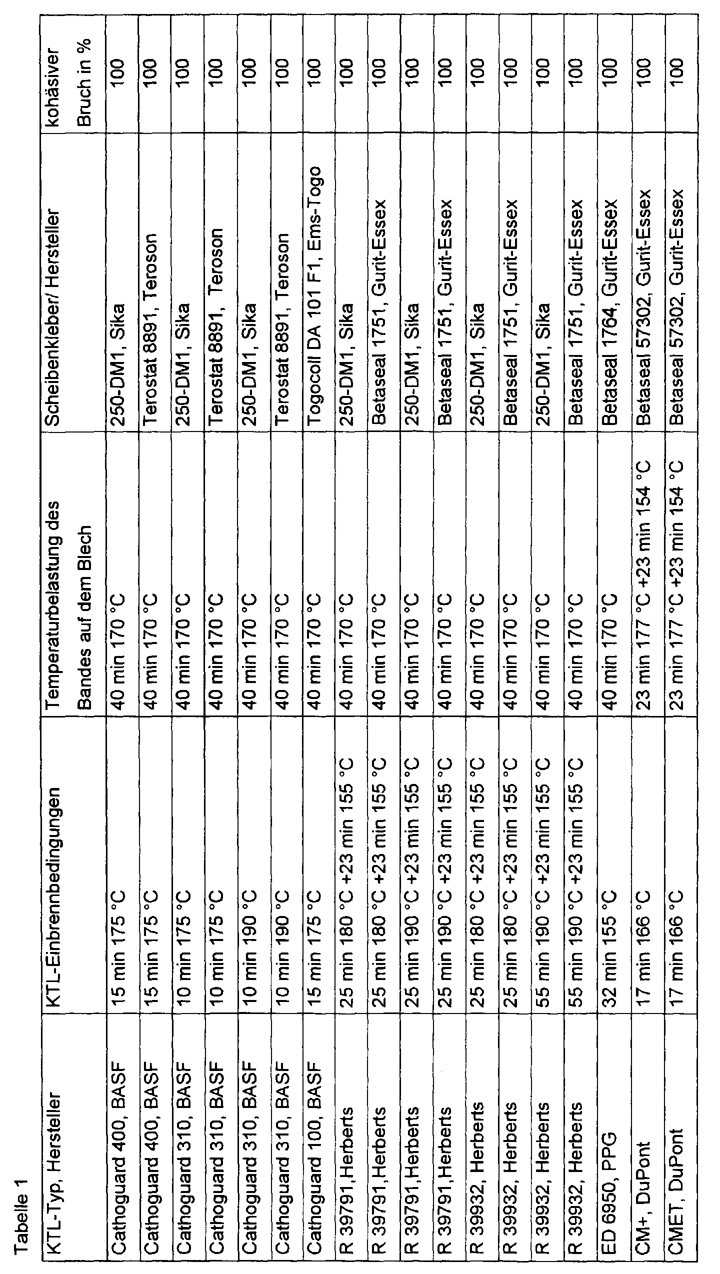

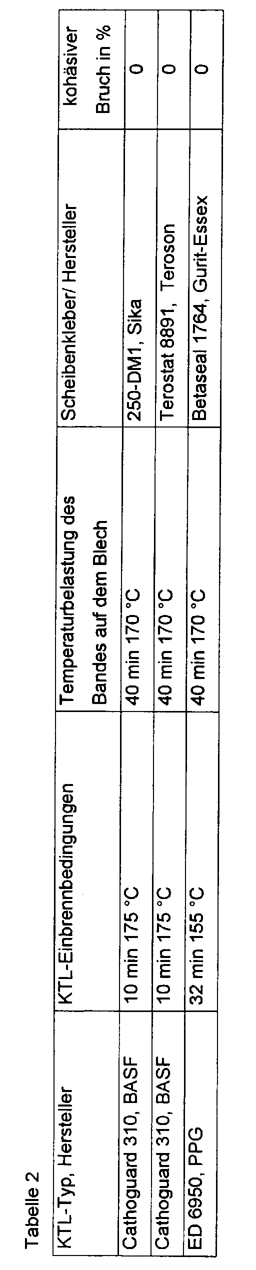

### Vergleichsbeispiel 2

Eine 25 µm dicke Polyethylenterephthalatfolie wurde mit Polyvinylidendichlorid-Lösung einseitig geprimert und mit einer Lösung eines Polymerisates aus 40 Gewichtsteilen n-Butylacrylat, 52 Gewichtsteilen 2-Ethylhexylacrylat, 4 Gewichtsteilen Acrylsäure und 4 Gewichtsteilen Glycidylmethacrylat, versetzt mit 3 Gewichtsanteilen wäßriger Zinkchloridlösung (10 %) und 0,1 Gewichtsteilen Desmodur L 75 (Bayer), so nachgestrichen, daß nach dem Trocknen ein Klebeband mit einer Gesamtdicke von 50 µm resultierte.

Dieser wurde analog Beispiel 1 gemäß Tabelle 2 auf zwei verschiedenen KTL-Typen geprüft. Auf beiden KTL zeigte sich Adhäsionsversagen des Scheibenklebers durch Kontamination des Haftgrundes, der auf Wechselwirkung der Klebmasse des Bandes mit dem KTL zurückzuführen war.

Als weiterer Test wurde das Klebeband kurvenförmig mit einem definierten Radius (r = 100 mm) auf ein mit Cathoguard 310 beschichtetes Testblech, das 10 min bei 175 °C eingebrannt worden war, appliziert. Das beklebte Blech wurde zunächst 5 min auf 180 °C im Ofen temperiert und anschließend 15 min bei 180 °C temperaturbehandelt.

Das kurvenförmig verklebte Band wies nach dem Ofenaufenthalt den gleichen Kurvenradius auf wie vorher, d.h., die Masse verfügt über eine praxisgerechte Scherstabilität auch unter hohen Temperaturen.

Nach dem Abkühlen wurde das Klebeband vom Blech abgezogen. Dabei wurde eine Abzugskraft von 3,1 N/cm gemessen, ohne daß sichtbare Masserückstände auf dem Blech verblieben.

### Vergleichsbeispiel 3

Eine 25 µm dicke Polyethytenterephthalatfolie wurde mit Polyvinylidendichlorid-Lösung einseitig geprimert und mit einer toluolischen Lösung von Ethylen-Vinylacetat mit 60 % Vinylacetatanteil so nachgestrichen, daß nach dem Trocknen ein Klebeband mit einer Gesamtdicke von 50 µm resultierte.

Nach dem Verkleben auf Cathoguard 310, das 10 min bei 175 °C eingebrannt worden war, und einer thermischen Belastung des verklebten Bandes von 170 °C über 40 min, war das Band nicht rückstandsfrei zu entfernen. Es traten sowohl Masseumspulungen als auch Kohäsionsbrüche der Masse in Abhängigkeit von Abzugswinkel und Abzugsgeschwindigkeit auf.

Als weiterer Test wurde das Klebeband kurvenförmig mit einem definierten Radius (r = 100 mm) auf ein mit Cathoguard 310 beschichtetes Testblech, das 10 min bei 175 °C eingebrannt worden war, appliziert. Das beklebte Blech wurde zunächst 5 min auf 180 °C im Ofen temperiert und anschließend 15 min bei 180 °C temperaturbehandelt.

Das kurvenförmig verklebte Band wies nach dem Ofenaufenthalt einen stark vergrößerten Kurvenradius gegenüber vorher auf, d.h., die Masse verfügte nicht über die erforderliche Scherstabilität unter praxisgerechten hohen Temperaturen, um der Rückstellkraft des in der Kurve vorgedehnten Trägers zu widerstehen.

## Patentansprüche

1. Klebeband, umfassend ein Trägermaterial, auf das eine Selbstklebemasse basierend auf einem Copolymer aus Ethylen, Vinylacetat, Acrylsäureester und gegebenenfalls Acrylsäureamid einseitig aufgetragen ist.

2. Klebeband nach Anspruch 1, dadurch gekennzeichnet, daß zwischen Trägermaterial und Selbstklebemasse ein Primer vorhanden ist.

3. Klebeband nach den Ansprüchen 1 und 2, dadurch gekennzeichnet, daß auf der Rückseite des Trägermaterials ein Trennlack vorhanden ist.

4. Klebeband nach den Ansprüchen 1 bis 3, dadurch gekennzeichnet, daß die Selbstkiebemasse die folgende Zusammensetzung aufweist:
Ethylen 10 bis 30, besonders bevorzugt 10 bis 15 Gew.-%
Vinylacetat 20 bis 55, besonders bevorzugt 30 bis 35 Gew.-%
Acrylsäureester 30 bis 69, besonders bevorzugt 50 bis 60 Gew.-%
Acrylsäureamid 0 bis 8, besonders bevorzugt 0,5 Gew.-%

5. Klebeband nach den Ansprüchen 1 bis 4, dadurch gekennzeichnet, daß die Selbstklebemasse eine Dicke von 15 bis 40 µm aufweist.

6. Klebeband nach den Ansprüchen 1 bis 5, dadurch gekennzeichnet, daß als Trägermaterial Polyesterfolien wie Polyethylenterephthalatfolien, Weich-PVC-Folien sowie Gewebe auf Baumwollbasis, auf Basis aromatischer Polyamide und/oder Polyester und Vliese oder Kombinationen der genannten Materialien eingesetzt werden.

7. Verwendung eines Klebebands gemäß einem der vorherigen Ansprüche zur Fensterflanschmaskierung.
